(19) Europäisches Patentamt
European Patent Office
Office européen des brevets

(11) **EP 3 483 960 B1**

(12) **EUROPEAN PATENT SPECIFICATION**

(45) Date of publication and mention of the grant of the patent:
**07.10.2020 Bulletin 2020/41**

(21) Application number: **18204976.7**

(22) Date of filing: **07.11.2018**

(51) Int Cl.:
*H01M 4/38* (2006.01)      *C22C 19/03* (2006.01)
*C22C 28/00* (2006.01)      *C22C 30/00* (2006.01)
*H01M 10/30* (2006.01)      *H01M 4/24* (2006.01)
*H01M 4/62* (2006.01)

(54) **NEGATIVE ELECTRODE FOR NICKEL HYDROGEN SECONDARY BATTERY, AND NICKEL HYDROGEN SECONDARY BATTERY INCLUDING THE NEGATIVE ELECTRODE**

NEGATIVE ELEKTRODE FÜR EINE NICKEL-WASSERSTOFF-SEKUNDÄRBATTERIE UND NICKEL-WASSERSTOFF-SEKUNDÄRBATTERIE MIT DER NEGATIVEN ELEKTRODE

ÉLECTRODE NÉGATIVE POUR BATTERIE SECONDAIRE AU NICKEL-HYDROGÈNE ET BATTERIE SECONDAIRE AU NICKEL-HYDROGÈNE INCLUANT L'ÉLECTRODE NÉGATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2017 JP 2017217555**

(43) Date of publication of application:
**15.05.2019 Bulletin 2019/20**

(73) Proprietor: **FDK Corporation**
**Tokyo 108-8212 (JP)**

(72) Inventors:
• **Saguchi, Akira**
  **Tokyo, 108-8212 (JP)**
• **Ishida, Jun**
  **Tokyo, 108-8212 (JP)**
• **Ohata, Shota**
  **Tokyo, 108-8212 (JP)**

(74) Representative: **Epping - Hermann - Fischer**
**Patentanwaltsgesellschaft mbH**
**Schloßschmidstraße 5**
**80639 München (DE)**

(56) References cited:
**EP-A1- 3 128 584       JP-A- S61 163 569**
**JP-A- 2002 025 547     US-A1- 2015 280 216**

**Description**

BACKGROUND OF THE INVENTION

Field of the Invention

The present invention relates to a negative electrode for a nickel hydrogen secondary battery, and a nickel hydrogen secondary battery including the negative electrode.

Description of the Related Art

Nickel hydrogen secondary batteries are known as one of alkali secondary batteries. The nickel hydrogen secondary batteries have been used in various devices such as portable devices, hybrid electric cars, in that the nickel hydrogen secondary batteries are higher in the capacity and better in the environmental safety as well than nickel cadmium secondary batteries. Such nickel hydrogen secondary batteries increasingly extend their applications, and are being used also for backup power sources and the like.

Although the backup power sources and the like are used in case of emergency, if they come to the end of operating life in that case of emergency, they cannot serve the purpose. Hence, for the backup power sources and the like, long operating life is demanded.

By the way, the backup power sources and the like are, basically, continuously charged at a constant rate.

In the environment where continuous charging as described above is carried out, batteries are liable to become overcharged. Being thus overcharged causes swelling of positive electrodes and presses on separators and deprives electrolyte solutions in the separators. As a result, so-called dryout is caused and discharging becomes impossible, exhausting the batteries' operating life.

In order to suppress the occurrence of such dryout, it is conceivably effective to increase the amount of the electrolyte solutions.

If an electrolyte solution is injected in a larger amount in a battery than usually, however, a separator can hardly retain such an electrolyte solution, and part of the electrolyte solution remains in the upper part of an electrode group and the like in some cases. In such a case, in some cases where an activation treatment is carried out on the battery, the following arises: the part of the electrolyte solution leaks outside the battery.

In order to suppress arising of such trouble, it is conceivable to take, for example, a measure where the solution retention properties of a negative electrode are enhanced and the electrolyte solution is retained in a large amount also in the negative electrode. Here, as a method of enhancing the solution retention properties of a negative electrode, there are known, for example, a method described in Japanese Patent Laid-Open No. 2001-085013, and the like.

Even if the solution retention properties of a negative electrode are enhanced as described above, however, when the electrolyte solution in a separator is deprived of, since the electrolyte solution hardly smoothly moves from the negative electrode to the separator and the electrolyte solution results in being maldistributed in an electrode group, dryout cannot sufficiently be suppressed.

Further, when the electrolyte solution is retained in a large amount in the negative electrode, trouble shown in the below arises in some cases.

When a nickel hydrogen secondary battery becomes in an overcharged state, a reaction of generating oxygen gas from its positive electrode occurs and the internal pressure of the battery rises. When the internal pressure of the battery rises, a safety valve of the battery works to release the oxygen gas and to result in releasing also the electrolyte solution outside. As a result, the operating life of the battery is exhausted. In the nickel hydrogen secondary battery, however, on its negative electrode, a reaction of absorbing the oxygen gas generated in the overcharging also occurs simultaneously. That is, the nickel hydrogen secondary battery has a function of being capable of suppressing the rise in the internal pressure of the battery by the oxygen gas. Thus, usual nickel hydrogen secondary batteries can suppress the rise in the internal pressure of the batteries and can suppress shortening of the operating life of the batteries.

By the way, the absorption reaction of oxygen gas on a negative electrode progresses at three-phase interfaces where a solid phase, a gas phase and a liquid phase are present. However, if an electrolyte solution is retained in a large amount in the negative electrode, since good three-phase interfaces are not formed and the absorption reaction of oxygen gas does not progress smoothly, the oxygen gas is not sufficiently absorbed. Then, the internal pressure of a battery rises. As a result, a safety valve of the battery works to release the electrolyte solution outside and the following trouble arises: the operating life of the battery results in being early exhausted.

Further when the electrolyte solution is retained in a large amount in the negative electrode, a reaction of the hydrogen absorbing alloy with the electrolyte solution more progresses to result in consuming the electrolyte solution. As a result, the following trouble arises: the electrolyte solution becomes insufficient and the operating life of the battery is early exhausted.

The present invention has been achieved based on the above situation, and an object thereof is to provide a negative electrode, for a nickel hydrogen secondary battery, being capable of attaining elongation of the operating life of a battery even in the case of being continuously charged, and a nickel hydrogen secondary battery comprising the negative electrode.

EP 3128584 A1 discloses a nickel hydrogen secondary battery comprising a container and an electrode group accommodated in the container in a sealed state together with an alkaline electrolyte, wherein the electrode group comprises a positive electrode and a negative electrode having a separator sandwiched therebetween, the alkaline electrolyte comprises NaOH as the main solute, and the negative electrode comprises a hydrogen storage alloy having a composition represented by a general formula: Ln1-xMgxNiy-zMz, wherein Ln is at least one element selected from the group consisting of Sc, Y, La, Ce, Pr, Nd, Pm, Sm, Eu, Gd, Tb, Dy, Ho, Er, Tm, Yb, Lu and Zr; M is at least one element selected from the group consisting of V, Nb, Ta, Cr, Mo, Fe, Ga, Zn, Sn, In, Cu, Al, Si, P, and B; subscripts x, y and z satisfy the following relations, respectively: $0 \leq x \leq 0.05$, $3.3 \leq y \leq 3.6$, and $0 \leq z \leq 0.50$; and the content of La in Ln is 25% or less.

JP 2002025547 A aims at improving adhesion of an electrode active substance and a current collector substrate, and aim at improving electrochemical durability. This is achieved by using a polymer having a chemical bonding property to the electrode active substance and having an ionic conductivity as a binder in a paste electrode of an alkaline secondary battery, the adhesion between the electrode active substance and the current collector metal plate can be improved, and a thin of electrode and an improvement of battery characteristic can be realized. Especially when perfluorocarbon polymer having sulfonic acid group is used as a binder for the positive electrode, the positive electrode is superior in the oxidation resistance which is especially required for the positive electrode, and appropriate.

JP S61163569 A aims at improving charge-discharge cycle characteristics and large current discharge characteristic by utilizing sheet-formed negative pole made of mixture of hydrogen-occluding alloy powder coated with chemical plating film of nickel or nickel alloy and alkali-resisting binder material. The hydrogen alloy such as of nickel system is produced by exposing in a high- pressure hydrogen gas atmosphere, and activation process to adsorb hydrogen is repetitively carried out, the alloy is thereby powdered into fine grains. The surface of the fine grain is coated with chemical plating film of nickel or nickel alloy. The hydrogen-occluding alloy powder coated with the chemical plating film and alkali-resisting binder material are mixed up and kneaded, the kneaded mixture is roll-formed into sheet, and employed for the negative pole constituents. The negative pole is made of nickel-net collector of its both surfaces pressure welded with these bodies. With this constitution, the bodies are well welded, thereby, hydrogen-occluding alloy powder is prevented from falling off, breaking away, etc., and also conductivity of the powder itself is improved. Accordingly, large current discharge characteristic becomes excellent, and charge-discharge characteristics are improved.

US 2015280216 A1 provides a nickel-metal hydride storage battery with suppression of rise in internal pressure, allowing suppression of alkaline electrolyte leakage even when two or more of the batteries are used. The battery includes: positive and negative electrodes; a separator interposed therebetween; and an alkaline electrolyte. The negative electrode includes: a material mixture layer including hydrogen storage alloy powder capable of electrochemically absorbing and releasing hydrogen; and a water-repellent layer including a first polymer including tetrafluoroethylene as monomer units, formed on the material mixture layer. The separator includes: a primary layer having a non-woven fabric structure of fibers; and a composite layer formed on the primary layer and being in contact with the water-repellent layer. The composite layer includes: fibers in continuity with the non-woven fabric structure; and a second polymer including tetrafluoroethylene as monomer units. The composite layer has a water contact angle of 10 to 80°.

SUMMARY OF THE INVENTION

The present invention provides a negative electrode for a nickel hydrogen secondary battery, the negative electrode comprising a negative electrode core and a negative electrode mixture held on the negative electrode core, wherein the negative electrode mixture comprises a hydrogen absorbing alloy and a water repellent, wherein: the hydrogen absorbing alloy has a composition represented by the general formula: $Ln_{1-x}Mg_xNi_{y-a-b}Al_aM_b$ (wherein Ln represents at least one element selected from La, Ce, Pr, Nd, Pm, Sm, Eu, Gd, Tb, Dy, Ho, Er, Tm, Yb, Lu, Sc, Y, Ti and Zr; and M represents at least one element selected from V, Nb, Ta, Cr, Mo, Mn, Fe, Co, Ga, Zn, Sn, In, Cu, Si, P and B; and the subscripts a, b, x and y satisfy relations represented by $0.05 \leq a \leq 0.30$, $0 \leq b \leq 0.50$, $0 < x < 0.05$ and $2.8 \leq y \leq 3.9$, respectively), and has a structure of an $A_2B_7$ type; and the water repellent comprises a perfluoroalkoxyalkane.

The present invention further provides a nickel hydrogen secondary battery comprising a container and an electrode group accommodated in the container together with an alkali electrolyte solution, wherein the electrode group comprises a positive electrode and a negative electrode stacked through a separator, wherein the negative electrode is the above-mentioned negative electrode for a nickel hydrogen secondary battery.

In the negative electrode for a nickel hydrogen secondary battery according to the present invention, the negative electrode mixture comprises a hydrogen absorbing alloy and a water repellent, wherein: the hydrogen absorbing alloy has a composition represented by the general formula: $Ln_{1-x}Mg_xNi_{y-a-b}Al_aM_b$ (wherein Ln represents at least one element selected from La, Ce, Pr, Nd, Pm, Sm, Eu, Gd, Tb, Dy, Ho, Er, Tm, Yb, Lu, Sc, Y, Ti and Zr; M represents at least one element selected from V, Nb, Ta, Cr, Mo, Mn, Fe, Co, Ga, Zn, Sn, In, Cu, Si, P and B; and the subscripts a, b, x and y satisfy relations represented by $0.05 \leq a \leq 0.30$, $0 \leq b \leq 0.50$, $0 < x < 0.05$ and $2.8 \leq y \leq 3.9$, respectively), and has a structure of an $A_2B_7$ type; and the water repellent comprises a perfluoroalkoxyalkane. This constitution, since in the negative electrode, maldistribution of the alkali electrolyte solution is suppressed and good three-phase interfaces are formed, enables the nickel hydrogen secondary battery comprising the negative electrode according to the present invention to be elongated in the operating life even when the battery is continuously charged.

BRIEF DESCRIPTION OF THE DRAWINGS

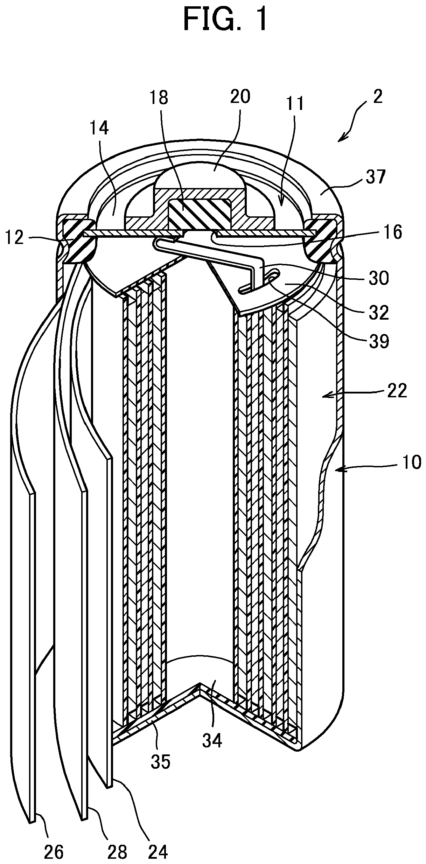

FIG. 1 is a perspective view illustrated by partially rupturing a nickel hydrogen secondary battery according to one embodiment of the present invention.

DETAILED DESCRIPTION OF THE PREFERRED EMBODIMENTS

Hereinafter, the nickel hydrogen secondary battery 2 (hereinafter, referred to as battery) according to the present invention will be described by reference to the drawing.
A battery 2 to which the present invention is applied is not especially limited, and the description will be given by taking as an example the case where the present invention is applied to the AA-size cylindrical battery 2 illustrated in FIG. 1.
As illustrated in FIG. 1, the battery 2 is equipped with an outer can 10 having an opened upper end and a bottomed cylindrical shape. The outer can 10 has conductivity and a bottom wall 35 thereof functions as a negative electrode terminal. A sealing body 11 is fixed to the opening of the outer can 10. The sealing body 11 contains a lid plate 14 and a positive electrode terminal 20, and seals the outer can 10. The lid plate 14 is a disc-shape member having conductivity. In the opening of the outer can 10, there are disposed the lid plate 14 and a ring-shape insulating packing 12 surrounding the lid plate 14, and the insulating packing 12 is fixed to an opening edge 37 of the outer can 10 by caulking the opening edge 37 of the outer can 10. That is, the lid plate 14 and the insulating packing 12 hermetically block the opening of the outer can 10 in cooperation with each other.
Here, the lid plate 14 has a center through-hole 16 at the center, and on the outer surface of the lid plate 14, there is disposed a rubber-made valve disc 18 plugging up the center through-hole 16. Further on the outer surface of the lid plate 14, there is electrically connected the metal-made positive electrode terminal 20 which has a cylindrical shape with a flange so as to cover the valve disc 18. The positive electrode terminal 20 presses the valve disc 18 toward the lid plate 14. Here, the positive electrode terminal 20 has a vent hole opened therein, which is not illustrated in figure.
Usually, the center through-hole 16 is hermetically closed with the valve disc 18. By contrast, when a gas is generated in the outer can 10 and the internal pressure thereof rises, the valve disc 18 is compressed by the internal pressure to open the center through-hole 16, and consequently, the gas is released from the outer can 10 to the outside through the center through-hole 16 and the vent hole (not illustrated in figure) of the positive electrode terminal 20. That is, the center through-hole 16, the valve disc 18 and the positive electrode terminal 20 form a safety valve for the battery.
In the outer can 10, an electrode group 22 is accommodated. The electrode group 22 comprises a strip-form positive electrode 24, a strip-form negative electrode 26 and a separator 28, and the electrode group 22 is wound in a spiral form in the state that the separator 28 is interposed between the positive electrode 24 and the negative electrode 26. That is, the positive electrode 24 and the negative electrode 26 are mutually stacked through the separator 28. The outermost periphery of the electrode group 22 is formed of a part (outermost peripheral part) of the negative electrode 26, and contacts with the inner peripheral wall of the outer can 10. That is, the negative electrode 26 and the outer can 10 are mutually electrically connected.
Then, in the outer can 10, there is disposed a positive electrode lead 30 between the electrode group 22 and the lid plate 14. In detail, one end of the positive electrode lead 30 is connected to the positive electrode 24, and the other end thereof is connected to the lid plate 14. Therefore, the positive electrode terminal 20 and the positive electrode 24 are mutually electrically connected through the positive electrode lead 30 and the lid plate 14. Here, between the lid plate 14 and the electrode group 22, there is disposed a circular upper insulating member 32, and the positive electrode lead 30 extends through a slit 39 installed in the upper insulating member 32. Further, also between the electrode group 22 and the bottom part of the outer can 10, there is disposed a circular lower insulating member 34.
Further, in the outer can 10, a predetermined amount of the alkali electrolyte solution is injected (not illustrated in figure). The alkali electrolyte solution is impregnated in the electrode group 22 and allows an electrochemical reaction (charge and discharge reaction) in charging and discharging between the positive electrode 24 and the negative electrode 26 to progress. As the alkali electrolyte solution, an aqueous solution containing, as a solute, at least one among KOH, NaOH and LiOH is preferably used.
As a material of the separator 28, for example, a polyamide fiber-made nonwoven fabric imparted with hydrophilic functional groups, and a polyolefin, such as polyethylene or polypropylene, fiber-made nonwoven fabric imparted with hydrophilic functional groups can be used.

The positive electrode 24 comprises a conductive positive electrode base material having a porous structure, and a positive electrode mixture held in pores of the positive electrode base material.

As such a positive electrode base material, for example, a sheet of foam nickel can be used.

The positive electrode mixture comprises a positive electrode active substance particle and a binder. Further as required, positive electrode additives are added to the positive electrode mixture.

The above binder functions to mutually bind the positive electrode active substance particles and to bind the positive electrode active substance particles to the positive electrode base material. Here, as the binder, for example, a carboxymethylcellulose, a methylcellulose, a PTFE (polytetrafluoroethylene) dispersion, or an HPC (hydroxypropylcellulose) dispersion can be used.

Then, the positive electrode additives include zinc oxide and cobalt hydroxide.

As the positive electrode active substance particle, a nickel hydroxide particle usually used for nickel hydrogen secondary batteries can be used. It is preferable that the nickel hydroxide particle to be adopted be an order-heightened nickel hydroxide particle.

Further, it is preferable to use, as the above nickel hydroxide particle, one containing Co as a solid solution. The Co as the solid solution component contributes to enhancement of the conductivity among the positive electrode active substance particles, and improves the charging acceptability. Here, when the content of Co contained as a solid solution in the nickel hydroxide particle is low, the effect of improving the charging acceptability is small; and conversely when too high, the particle growth of the nickel hydroxide particle results in being inhibited. Hence, it is preferable to use, as the nickel hydroxide particle, a form thereof containing 0.5% by mass or more and 5.0% by mass or less of Co as a solid solution component.

Then, it is preferable that the above nickel hydroxide particle further contains Zn as a solid solution. Here, Zn contributes to suppression of swelling of the positive electrode.

It is preferable that the content of Zn contained as a solid solution in the nickel hydroxide particle be set to 2.0% by mass or more and 5.0% by mass or less based on the nickel hydroxide.

Then, it is preferable that the above nickel hydroxide particle be configured to be a form where the surface thereof is covered with a surface layer comprising a cobalt compound. It is preferable to adopt, as the surface layer, a high-order cobalt compound layer containing a cobalt compound order-heightened to tri- or more valent.

The above high-order cobalt compound layer is excellent in conductivity and forms a conductive network. It is preferable to adopt, as the high-order cobalt compound layer, a layer containing a cobalt compound, such as cobalt oxyhydroxide (CoOOH), which is order-heightened to tri- or more valent.

The positive electrode active substance particle as described above is produced by a production method usually used for nickel hydrogen secondary batteries.

Then, the positive electrode 24 can be produced, for example, as follows.

First, a positive electrode mixture slurry containing the positive electrode active substance particle, water and the binder is prepared. The prepared positive electrode mixture slurry is packed, for example in a sheet of foam nickel, and dried. After the drying, the sheet of the foam nickel packed with nickel hydroxide particles and the like is rolled and then cut to thereby produce the positive electrode 24.

Then, the negative electrode 26 will be described.

The negative electrode 26 has a strip-form conductive negative electrode core, and a negative electrode mixture is held on the negative electrode core.

The negative electrode core is a sheet-form metal material having through-holes distributed thereon, and for example, a punching metal sheet can be used. The negative electrode mixture is not only packed in the through-holes of the negative electrode core, but also held in a layer form on both surfaces of the negative electrode core.

The negative electrode mixture contains a hydrogen absorbing alloy particle capable of absorbing and releasing hydrogen as a negative electrode active substance, a conductive agent, a binder, a negative electrode auxiliary agent and a water repellent.

The above binder functions to mutually bind the hydrogen absorbing alloy particles, the conductive agent and the like, and simultaneously to bind the hydrogen absorbing alloy particles, the conductive agent and the like to the negative electrode core. Here, the binder is not especially limited, and for example, a binder usually used for nickel hydrogen secondary batteries, such as a hydrophilic or hydrophobic polymer, or a carboxymethylcellulose can be used.

As the negative electrode auxiliary agent, styrene butadiene rubber, sodium polyacrylate or the like can be used.

The composition of the hydrogen absorbing alloy in the hydrogen absorbing alloy particle is represented by the following general formula (I).

$$Ln_{1-x}Mg_xNi_{y-a-b}Al_aM_b \qquad \ldots (I)$$

In the general formula (I), Ln represents at least one element selected from La, Ce, Pr, Nd, Pm, Sm, Eu, Gd, Tb, Dy, Ho, Er, Tm, Yb, Lu, Sc, Y, Ti and Zr; M represents at least one element selected from V, Nb, Ta, Cr, Mo, Mn, Fe, Co, Ga, Zn, Sn, In, Cu, Si, P and B; and the subscripts a, b, x and y satisfy relations represented by $0.05 \leq a \leq 0.30$, $0 \leq b \leq 0.50$, $0 < x < 0.05$ and $2.8 \leq y \leq 3.9$, respectively.

Here, the hydrogen absorbing alloy according to the present invention is a hydrogen absorbing alloy having an $A_2B_7$-type structure, a so-called superlattice structure, formed by layering an $AB_2$-type subunit and an $AB_5$-type subunit when Ln and Mg in the general formula (I) are taken as an A component and Ni, Al and M are taken as a B component. The hydrogen absorbing alloy having such a superlattice structure concurrently has the advantage of stable absorption and release of hydrogen, which is a characteristic of an $AB_5$-type alloy, and the advantage of the large amount of hydrogen absorbed, which is a characteristic of an $AB_2$-type alloy. Hence, the hydrogen absorbing alloy according to the general formula (I), since being excellent in the hydrogen absorbing power, contributes to capacity enhancement of the battery 2 to be obtained.

Then, in the hydrogen absorbing alloy according to the present invention, the amount of Mg represented by the subscript x is suppressed small. Mg is a light metal, and when the ratio of such a light element is reduced, since the ratio of relatively heavy elements such as Sm increases along therewith, the density of the hydrogen absorbing alloy as a whole becomes relatively high. The specific density of the hydrogen absorbing alloy according to the present invention is 8.5 to 8.7 g/cm$^3$. Here, since the density of a hydrogen absorbing alloy of a usual $A_2B_7$-type ($Ce_2Ni_7$-type) is 7.9 to 8.4 g/cm$^3$, and the density of a hydrogen absorbing alloy of a usual $AB_5$-type is 7.9 to 8.1 g/cm$^3$, comparing with these conventional hydrogen absorbing alloys, it can be said that the hydrogen absorbing alloy according to the present invention has a high density compared with a conventional hydrogen absorbing alloy.

When the hydrogen absorbing alloy having a high density is thus used, voids necessary for gas diffusion in the negative electrode increase, facilitating gas diffusion. Hence, it becomes easier for the oxygen gas generated in the positive electrode in overcharging and the hydrogen absorbing alloy to contact with each other.

Particles of the hydrogen absorbing alloy can be obtained, for example, as follows.

First, metal raw materials are weighed so as to provide a predetermined composition, and mixed; and the resulting mixture is melted, for example, by an induction melting furnace, to thereby make an ingot. The obtained ingot is subjected to a heat treatment of heating in an inert gas atmosphere at 900 to 1,200°C for 5 to 24 hours. Thereafter, the ingot is crushed and sieved to thereby obtain particles of the hydrogen absorbing alloy having a desired particle diameter.

Here, the particle diameter of the particles of the hydrogen absorbing alloy is not especially limited, and preferably, the particles having an average particle diameter of 55.0 to 70.0 $\mu$m are used. Here, in the present description, the average particle diameter means an average particle diameter corresponding to 50% in cumulation in terms of mass, and is determined by a laser diffraction scattering method using a particle size distribution analyzer.

As the conductive agent, a conductive agent usually used for negative electrodes of nickel hydrogen secondary batteries is used. For example, carbon black or the like is used.

Then, as the water repellent, a perfluoroalkoxyalkane (hereinafter, referred to as PFA) is used. The form where the PFA is contained in the negative electrode mixture is not especially limited, and a form where PFA is applied to the surface of an intermediate mixture layer formed by holding the hydrogen absorbing alloy, the conductive agent and the like being constituting materials of the negative electrode mixture excluding PFA, on the negative electrode core to be thereby contained in the negative electrode mixture is preferable.

The PFA imparts water repellency to the negative electrode, and contributes to formation of good three-phase interfaces on the surface of the hydrogen absorbing alloy. Hence, it becomes easy for the oxygen gas generated in the positive electrode in overcharging to be absorbed in the negative electrode (hydrogen absorbing alloy).

Here, based on the amount of PFA to be applied, it is preferable that the mass of the solid content of PFA per unit area be set to 0.1 mg/cm$^2$ or more. This is because with the mass of the solid content of PFA being less than 0.1 mg/cm$^2$, it is difficult for good three-phase interfaces to be formed on the surface of the hydrogen absorbing alloy. In order to form better three-phase interfaces on the surface of the hydrogen absorbing alloy, it is more preferable that the mass of the solid content of PFA be set to 0.3 mg/cm$^2$ or more. By contrast, when the mass of the solid content of PFA exceeds 2.0 mg/cm$^2$, the surface of the hydrogen absorbing alloy is largely covered with PFA to reduce the reaction area of battery reaction, and the discharge characteristics of the battery decrease. Therefore, it is preferable that the upper limit of the mass of the solid content of PFA be set to 2.0 mg/cm$^2$ or less.

The negative electrode 26 can be produced, for example, as follows.

First, a hydrogen absorbing alloy powder being an aggregate of the above hydrogen absorbing alloy particles, the conductive agent, the binder and water are provided and kneaded to thereby prepare a paste. The obtained paste is applied to the negative electrode core and dried. After the drying, the negative electrode core holding the hydrogen absorbing alloy powder, the conductive agent and the binder is wholly rolled to raise the packing density of the hydrogen absorbing alloy, thereby obtaining an intermediate article of the negative electrode. Then, a dispersion liquid of PFA as the water repellent is applied to the surface of the intermediate article of the negative electrode. Thereafter, the intermediate article of the negative electrode having PFA applied thereto is cut into a predetermined shape. Thereby, the negative electrode 26 having the negative electrode mixture containing the hydrogen absorbing alloy, PFA and the like is produced.

The positive electrode 24 and the negative electrode 26 produced as described above are wound in a spiral form in the state that the separator 28 is interposed therebetween to thereby form the electrode group 22.

The electrode group 22 thus obtained is accommodated in the outer can 10. Following this, the alkali electrolyte solution is injected in a predetermined amount in the outer can 10. Successively, the outer can 10 accommodating the electrode group 22 and the alkali electrolyte solution is sealed with the sealing body 11 equipped with the positive electrode terminal 20 to thereby obtain the battery 2 according to the present invention. The obtained battery 2 is subjected to an initial activation treatment and thereby made in a usable state.

In the battery 2 according to the present invention, due to the synergetic effect of the hydrogen absorbing alloy having the above composition represented by the general formula (I) and having the $A_2B_7$-type structure, and the PFA, even in the case of continuous charging, maldistribution of the electrolyte solution is suppressed and dryout is suppressed; and since gas diffusion is made easy and moreover, good three-phase interfaces are formed, the negative electrode can sufficiently absorb oxygen gas and the rise in the internal pressure of the battery can be suppressed, so that elongation of the operating life of the battery in continuous charging can be attained.

[Examples]

1. Production of batteries

(Example 1)

(1) Production of a positive electrode

Nickel sulfate, zinc sulfate and cobalt sulfate were weighed so as to become, based on Ni, 2.5% by mass of Zn and 1.0% by mass of Co; and these were added to a 1N sodium hydroxide aqueous solution containing ammonium ions to prepare a mixed aqueous solution. While the obtained mixed aqueous solution was being stirred, a 10N sodium hydroxide aqueous solution was gradually added and allowed to react in the mixed aqueous solution while the pH was stabilized at 13 to 14 during the reaction to generate base particles containing nickel hydroxide as a main component and Zn and Co as a solid solution.

The obtained base particles were washed three times with pure water in an amount 10 times that of the base particles, and thereafter subjected to dehydration and drying treatment. Then, as a result of measurement of the particle diameter of the obtained base particles by using a laser diffraction scattering-type particle size distribution analyzer, the average particle diameter corresponding to 50% in cumulation in terms of mass of the base particles was 8 $\mu$m.

Then, the obtained base particles were charged in a cobalt sulfate aqueous solution; a 1-mol/l sodium hydroxide aqueous solution was gradually dropped and allowed to react while the resulting cobalt sulfate aqueous solution was being stirred, to generate a precipitate while the pH during the reaction was being maintained at 11. Then, the generated precipitate was filtered off, and washed with pure water, and thereafter vacuum dried. Thereby, intermediate product particles in which the surface of the base particles had 5% by mass of a layer of cobalt hydroxide were obtained. Then, the thickness of the layer of cobalt hydroxide was about 0.1 $\mu$m.

Then, the intermediate product particles were charged in a 25% by mass of sodium hydroxide aqueous solution. Here, in the case where the mass of a powder being an aggregate of the intermediate product particles was taken to be P, and the mass of the sodium hydroxide aqueous solution was taken to be Q, the mass ratio thereof was set at P:Q = 1:10. Then, the sodium hydroxide aqueous solution containing the powder of the intermediate product added therein was subjected to a heat treatment of holding the temperature at a constant 85°C for 8 hours under stirring.

The powder of the intermediate product having been subjected to the above heat treatment was washed with pure water, and dried by being exposed to warm air at 65°C. Thereby, a positive electrode active substance powder being an aggregate of the positive electrode active substance particles which were the base particles containing Zn and Co as a solid solution and having, on the surface of the base particles, a surface layer containing an order-heightened cobalt oxide was obtained.

Then, to 95 parts by mass of the positive electrode active substance powder obtained as described above, 50.0 parts by mass of water containing 3.0 parts by mass of a powder of zinc oxide, 2.0 parts by mass of cobalt hydroxide, and 0.2% by mass of a powder of hydroxypropylcellulose as a binder was added and kneaded, to prepare a positive electrode mixture slurry.

Then, the positive electrode mixture slurry was packed in a sheet-form nickel foam as a positive electrode base material. Here, the nickel foam used had a surface density (basis weight) of about 600 g/m$^2$, a porosity of 95% and a thickness of about 2 mm.

The nickel foam packed with the positive electrode mixture slurry was dried, thereafter rolled while making a regulation such that the packing density of the positive electrode active substance calculated by the following formula (II) became 3.2 g/cm$^3$, and thereafter cut into a predetermined size to obtain a positive electrode for an AA size.

$$\text{Packing density of the positive electrode active substance [g/cm}^3] = \text{mass of the positive electrode mixture [g]} / (\text{height of the electrode [cm]} \times \text{length of the electrode [cm]} \times \text{thickness of the electrode [cm]} - \text{mass of the nickel foam [g]} / \text{density of nickel [g/cm}^3]) \ldots \text{(II)}$$

(2) Production of a negative electrode

Metal materials of La, Sm, Mg, Ni and Al were mixed so that each metal material became a predetermined molar ratio, and thereafter charged and melted in an induction melting furnace, and cooled to produce an ingot.

Then, the ingot was subjected to a heat treatment of heating in an argon gas atmosphere at a temperature of 1,000°C for 10 hours to be homogenized, and thereafter mechanically crushed in an argon gas atmosphere to obtain a rare earth-Mg-Ni-based hydrogen absorbing alloy powder. The particle size distribution of the obtained rare earth-Mg-Ni-based hydrogen absorbing alloy powder was measured by a laser diffraction scattering-type particle size distribution analyzer (analyzer name: SRA-150, manufactured by MicrotracBel Corp.). As a result, the average particle diameter corresponding to 50% in cumulation in terms of mass was 65 $\mu$m.

The composition of the hydrogen absorbing alloy powder was analyzed by a high-frequency inductively coupled plasma spectroscopy (ICP), and was $La_{0.198}Sm_{0.792}Mg_{0.01}Ni_{3.30}Al_{0.2}$. Further the hydrogen absorbing alloy powder was subjected to an X-ray diffraction measurement (XRD measurement), and the crystal structure was a so-called superlattice structure of an $A_2B_7$ type ($Ce_2Ni_7$ type). Further the density of the hydrogen absorbing alloy was measured by using a true density measuring instrument (a dry-type automatic densimeter, AccuPyc 1330 (product name), manufactured by Shimadzu Corp.), and the density of the hydrogen absorbing alloy of Example 1 was 8.6 g/cm$^3$. Here, the measurement of the density utilized a constant volume expansion method. Specifically, the volume of a sample was determined by measuring a change in the pressure of helium gas in a calibrated volume. Then, the density was determined by dividing a previously measured mass of the sample by the volume of the sample determined as described above. Here, in the present invention, the density of the hydrogen absorbing alloy shall mean a true density of the hydrogen absorbing alloy.

To 100 parts by mass of the obtained powder of the hydrogen absorbing alloy, 0.50 parts by mass of a powder of a hollow carbon black having a hollow shell-shaped structure (specifically, Ketjen Black(R), manufactured by Lion Speciality Chemicals Co., Ltd.), 1.0 parts by mass of a powder of a styrene butadiene rubber, 0.25 parts by mass of a powder of a sodium polyacrylate, 0.05 parts by mass of a powder of a carboxymethylcellulose, and 20 parts by mass of water were added and kneaded in an environment of 25°C, to prepare a paste.

The paste was applied uniformly and so as to provide a constant thickness on both surfaces of a punching metal sheet as a negative electrode substrate. The negative electrode mixture paste was packed also in through-holes. Here, the punching metal sheet was an iron-made strip-form body in which a large number of through-holes pierced in the thickness direction were distributed, and which had a thickness of 60 $\mu$m, and was plated with nickel on its surface.

After the paste was dried, the punching metal sheet holding the hydrogen absorbing alloy and the like was rolled while making a regulation such that the packing density (hereinafter, referred to as the hydrogen absorbing alloy packing density) of the hydrogen absorbing alloy calculated by the following formula (III) became 4.8 g/cm$^3$, to obtain an intermediate article of a negative electrode.

$$\text{Packing density of the hydrogen absorbing alloy [g/cm}^3] = \text{mass of the hydrogen absorbing alloy [g]} / (\text{height of the electrode [cm]} \times \text{length of the electrode [cm]} \times \text{thickness of the electrode [cm]} - \text{mass of the punching metal sheet [g]} / \text{density of iron [g/cm}^3]) \ldots \text{(III)}$$

Thereafter, a dispersion liquid of PFA was applied to both surfaces of the intermediate article of the negative electrode so that the mass of the solid content per unit area of each surface became 0.5 mg/cm$^2$, and dried. Thereafter,

the intermediate article of the negative electrode was cut into a predetermined size to obtain a negative electrode 26 for an AA size.

(3) Assembly of a nickel hydrogen secondary battery

The positive electrode 24 and the negative electrode 26 obtained as described above were wound in a spiral form in the state of the separator 28 being interposed therebetween to produce an electrode group 22. The separator 28 used for the production of the electrode group 22 was a polypropylene fiber-made nonwoven fabric having been subjected to a sulfonation treatment, and had a thickness of 0.1 mm (basis weight: 40 $g/m^2$).

Then, an alkali electrolyte solution being an aqueous solution containing KOH, NaOH and LiOH as solutes was provided. The alkali electrolyte solution had a mixing ratio in mass of KOH, NaOH and LiOH of KOH:NaOH:LiOH = 15:2:1, and had a specific gravity of 1.30.

Then, the electrode group 22 was accommodated in a bottomed cylindrical outer can 10, and 2.9 g of the provided alkali electrolyte solution was injected. Thereafter, an opening of the outer can 10 was closed with a sealing body 11 to assemble a rated capacity-1,500 mAh AA-size battery 2.

(4) Initial activation treatment

The obtained battery 2 was three times subjected to a charge and discharge cycle where a charge and discharge operation in which the obtained battery 2 was charged in an environment of a temperature of 25°C at a charge current of 1.0 It for 16 hours, and thereafter discharged at a discharge current of 1.0 It until the battery voltage became 1.0 V was taken as one cycle. The battery 2 was thus subjected to an initial activation treatment, and was made in a usable state.

(Example 2)

A nickel hydrogen secondary battery was produced as in Example 1, except for setting the composition of the hydrogen absorbing alloy to $La_{0.194}Sm_{0.776}Mg_{0.03}Ni_{3.30}Al_{0.2}$. The density of the hydrogen absorbing alloy of Example 2 was 8.6 $g/cm^3$. The crystal structure of the hydrogen absorbing alloy of Example 2 was an $A_2B_7$ type.

(Example 3)

A nickel hydrogen secondary battery was produced as in Example 1, except for applying the dispersion liquid of PFA to both surfaces of the intermediate article of the negative electrode so that the mass of the solid content per unit area of each surface became 0.3 $mg/cm^2$. The density of the hydrogen absorbing alloy of Example 3 was 8.6 $g/cm^3$. The crystal structure of the hydrogen absorbing alloy of Example 3 was an $A_2B_7$ type.

(Example 4)

A nickel hydrogen secondary battery was produced as in Example 1, except for applying the dispersion liquid of PFA to both surfaces of the intermediate article of the negative electrode so that the mass of the solid content per unit area of each surface became 1.0 $mg/cm^2$. The density of the hydrogen absorbing alloy of Example 4 was 8.6 $g/cm^3$. The crystal structure of the hydrogen absorbing alloy of Example 4 was an $A_2B_7$ type.

(Example 5)

A nickel hydrogen secondary battery was produced as in Example 1, except for applying the dispersion liquid of PFA to both surfaces of the intermediate article of the negative electrode so that the mass of the solid content per unit area of each surface became 2.0 $mg/cm^2$. The density of the hydrogen absorbing alloy of Example 5 was 8.6 $g/cm^3$. The crystal structure of the hydrogen absorbing alloy of Example 5 was an $A_2B_7$ type.

(Example 6)

A nickel hydrogen secondary battery was produced as in Example 1, except for applying the dispersion liquid of PFA to both surfaces of the intermediate article of the negative electrode so that the mass of the solid content per unit area of each surface became 0.1 $mg/cm^2$. The density of the hydrogen absorbing alloy of Example 6 was 8.6 $g/cm^3$. The crystal structure of the hydrogen absorbing alloy of Example 6 was an $A_2B_7$ type.

(Comparative Example 1)

A nickel hydrogen secondary battery was produced as in Example 1, except for applying no dispersion liquid of PFA. The density of the hydrogen absorbing alloy of Comparative Example 1 was 8.6 g/cm$^3$. The crystal structure of the hydrogen absorbing alloy of Comparative Example 1 was an $A_2B_7$ type.

(Comparative Example 2)

A nickel hydrogen secondary battery was produced as in Example 1, except for setting the composition of the hydrogen absorbing alloy to $La_{0.164}Pr_{0.333}Nd_{0.333}Mg_{0.17}Ni_{3.10}Al_{0.2}$, and applying no dispersion liquid of PFA. The density of the hydrogen absorbing alloy of Comparative Example 2 was 8.1 g/cm$^3$. The crystal structure of the hydrogen absorbing alloy of Comparative Example 2 was an $A_2B_7$ type.

(Comparative Example 3)

A nickel hydrogen secondary battery was produced as in Example 1, except for applying a dispersion liquid of PTFE in place of PFA to both surfaces of the intermediate article of the negative electrode so that the mass of the solid content per unit area of each surface became 0.5 mg/cm$^2$. The density of the hydrogen absorbing alloy of Comparative Example 3 was 8.6 g/cm$^3$. The crystal structure of the hydrogen absorbing alloy of Comparative Example 3 was an $A_2B_7$ type.

(Comparative Example 4)

A nickel hydrogen secondary battery was produced as in Example 1, except for setting the composition of the hydrogen absorbing alloy to $La_{0.270}SM_{0.630}Mg_{0.10}Ni_{3.30}Al_{0.2}$. The density of the hydrogen absorbing alloy of Comparative Example 4 was 8.4 g/cm$^3$. The crystal structure of the hydrogen absorbing alloy of Comparative Example 4 was an $A_2B_7$ type.

(Comparative Example 5)

A nickel hydrogen secondary battery was produced as in Example 1, except for setting the composition of the hydrogen absorbing alloy to $La_{0.270}Sm_{0.630}Mg_{0.10}Ni_{3.30}Al_{0.2}$, and applying no dispersion liquid of PFA. The density of the hydrogen absorbing alloy of Comparative Example 5 was 8.4 g/cm$^3$. The crystal structure of the hydrogen absorbing alloy of Comparative Example 5 was an $A_2B_7$ type.

2. Evaluation of the nickel hydrogen secondary batteries

(1) Continuous charging test

The batteries of Examples 1 to 6 and Comparative Examples 1 to 4, which had been subjected to the initial activation treatment, were continuously charged in an environment of 0°C at a charge current of 0.1 It for 14 days. After the finish of the continuous charging, each battery was allowed to stand in an environment of 25°C for 2 hours. Then, for the battery after the being left for 2 hours, the alternating resistance value was measured in an environment of 25°C. The measurement results are shown as internal resistances after the test in Table 1.

(2) Measurement of the amount of the electrolyte solution retained after the continuous charging test

Each battery after the finish of the measurement of the alternating resistance value was disassembled; the negative electrode and the separator were taken out; and masses of the negative electrode and the separator were each measured. The obtained measurement values were taken as a mass of the negative electrode after the disassembly and a mass of the separator after the disassembly, respectively.
Thereafter, the negative electrode and the separator were fully washed with ion-exchange water, and thereafter put in a reduced-pressure chamber to be dried under reduced pressure. The dry masses of the negative electrode and the separator after the drying were each measured. The obtained measurement values were taken as a dry mass of the negative electrode and a dry mass of the separator, respectively.
Then, the amount of the electrolyte solution retained in the negative electrode was determined from a difference between the mass of the negative electrode after the disassembly and the dry mass thereof. Further the amount of the electrolyte solution retained in the separator was determined from a difference between the mass of the separator after the disassembly and the dry mass thereof. The determined amounts of the electrolyte solution retained are shown as the amounts of the electrolyte solution retained in the separator and the negative electrode after the test in Table 1.

Here, it was indicated that the lower the value of the amount of the electrolyte solution retained in the negative electrode, the better the water repellency, and the larger the value of the amount of the electrolyte solution retained in the separator, the more hardly the dryout occurs, and the longer the operating life of the batteries.

[Table 1]

[Table 1]

| | Hydrogen Absorbing Alloy | | Water Repellent | | Internal Resistance after Test [mΩ] | Amount of Electrolyte Solution Retained after Test [g] | |
|---|---|---|---|---|---|---|---|
| | Composition | Density [g/cm$^3$] | Kind | Amount Applied [mg/cm$^2$] | | Separator | Negative Electrode |
| Example 1 | $La_{0.198}Sm_{0.792}Mg_{0.01}Ni_{3.30}Al_{0.2}$ | 8.6 | PFA | 0.5 | 19.2 | 0.387 | 0.734 |
| Example 2 | $La_{0.194}Sm_{0.776}Mg_{0.03}Ni_{3.30}Al_{0.2}$ | 8.6 | PFA | 0.5 | 21.1 | 0.351 | 0.728 |
| Example 3 | $La_{0.198}Sm_{0.792}Mg_{0.01}Ni_{3.30}Al_{0.2}$ | 8.6 | PFA | 0.3 | 20.9 | 0.358 | 0.742 |
| Example 4 | $La_{0.198}Sm_{0.792}Mg_{0.01}Ni_{3.30}Al_{0.2}$ | 8.6 | PFA | 1.0 | 19.1 | 0.382 | 0.730 |
| Example 5 | $La_{0.198}Sm_{0.792}Mg_{0.01}Ni_{3.30}Al_{0.2}$ | 8.6 | PFA | 2.0 | 19.1 | 0.395 | 0.729 |
| Example 6 | $La_{0.198}Sm_{0.792}Mg_{0.01}Ni_{3.30}Al_{0.2}$ | 8.6 | PFA | 0.1 | 24.4 | 0.279 | 0.784 |
| Comparative Example 1 | $La_{0.198}Sm_{0.792}Mg_{0.01}Ni_{3.30}Al_{0.2}$ | 8.6 | none | 0 | 26.5 | 0.238 | 0.798 |
| Comparative Example 2 | $La_{0.164}Pr_{0.333}Nd_{0.333}Mg_{0.17}Ni_{3.10}Al_{0.2}$ | 8.1 | none | 0 | 32.0 | 0.153 | 0.689 |
| Comparative Example 3 | $La_{0.198}Sm_{0.792}Mg_{0.01}Ni_{3.30}Al_{0.2}$ | 8.6 | PTFE | 0.5 | 25.2 | 0.249 | 0.797 |
| Comparative Example 4 | $La_{0.270}Sm_{0.630}Mg_{0.10}Ni_{3.30}Al_{0.2}$ | 8.4 | PFA | 0.5 | 26.5 | 0.240 | 0.695 |
| Comparative Example 5 | $La_{0.270}Sm_{0.630}Mg_{0.10}Ni_{3.30}Al_{0.2}$ | 8.4 | none | 0 | 29.1 | 0.203 | 0.756 |

(3) Consideration

(i) The internal resistance values of the batteries after the continuous charging test of Comparative Examples 1 and 2 are 26.5 to 32.0 mΩ. By contrast, the internal resistance values of the batteries after the continuous charging test of Examples 1 to 6 are 19.1 to 24.4 mQ; thus, the batteries of Examples 1 to 6, comparing with the batteries of Comparative Examples 1 and 2, have low internal resistance values. From this, it is clear that the batteries of Examples 1 to 6, comparing with the batteries of Comparative Examples 1 and 2, have sufficiently low internal resistance values and are not in the situation that the operating life was exhausted due to the dryout. That is, it can be said that the batteries of Examples 1 to 6, comparing with the batteries of Comparative Examples 1 and 2, have long operating lives under the continuous charging environment. This is understandable also from the fact that the amounts of the electrolyte solution retained in the separators after the continuous charging in the batteries of Examples 1 to 6 are larger than the amounts of the electrolyte solution retained in the separators after the continuous charging in the batteries of Comparative Examples 1 and 2.

The batteries of Examples 1 to 6 have PFA as the water repellent applied to the negative electrodes. The negative electrodes contained in the batteries of Examples 1 to 6 use hydrogen absorbing alloys having relatively high densities. By contrast, the batteries of Comparative Examples 1 and 2 have no water repellent applied to the negative electrodes. The hydrogen absorbing alloy used for the negative electrode contained in the battery of Comparative Example 1 has a density equal to those of Examples 1 to 6; and the hydrogen absorbing alloy used for the negative electrode contained in the battery of Comparative Example 2 has a lower density than the hydrogen absorbing alloy of Examples 1 to 6. It is conceivable from these that the containing PFA in the negative electrode using the high-density hydrogen absorbing alloy is able to attain the enhancement of the operating life under the continuous charging environment. That is, in the present invention, the following action conceivably works. As seen in Examples of the present invention, the use of the high-density hydrogen absorbing alloy enables to increase voids in the negative electrode and facilitates gas diffusion. Then, the use of PFA as the water repellent enables to suppress maldistributed presence of the electrolyte solution in the negative electrode and it is conceivable that the amount of the electrolyte solution retained in the separator is enabled to be maintained in the state of being a large amount thereof. Further since complete covering of the hydrogen absorbing alloy with the electrolyte solution is enabled to be suppressed due to PFA, good three-phase interfaces are enabled to be formed on the surface of the hydrogen absorbing alloy. Consequently, an absorption reaction in the negative electrode of absorbing oxygen gas generated in the positive electrode in the continuous charging is enabled to be promoted, and the rise in the internal pressure of the battery is enabled to be suppressed. Further since complete covering of the hydrogen absorbing alloy with the electrolyte solution is enabled to be suppressed by PFA, reactions between the electrolyte solution and the hydrogen absorbing alloy are enabled to be reduced; generation of $Mg(OH)_2$ generated on the surface of the hydrogen absorbing alloy is enabled to be suppressed; and the amount of the electrolyte solution consumed is was enabled to be reduced. It is conceivable that by these actions, the nickel hydrogen secondary battery according to the present invention, even when being continuously charged, enables to suppress maldistribution of the electrolyte solution and exhaustion of the electrolyte solution, and enables to elongate the operating life.

(ii) The battery of Comparative Example 1 is a battery produced as in the case of the battery of Example 1, except for applying no PFA to the negative electrode. Comparing these Example 1 and Comparative Example 1, Example 1 has a larger amount of the electrolyte solution retained in the separator and a smaller amount of the electrolyte solution retained in the negative electrode than Comparative Example 1. It is clear from this that adoption of an aspect containing PFA in the negative electrode suppresses the maldistribution of the electrolyte solution in the negative electrode even under the continuous charging environment, and is effective in preventing exhaustion of the electrolyte solution in the separator.

(iii) The battery of Example 2 is a battery produced as in the case of the battery of Example 1, except that the ratio of Mg in the hydrogen absorbing alloy is higher than that of Example 1. Comparing these Example 1 and Example 2, Example 1 has a lower internal resistance value and a larger amount of the electrolyte solution retained in the separator than Example 2. It is clear from this that a lower ratio of Mg in the hydrogen absorbing alloy contributes to more elongation of the operating life in the continuous charging.

(iv) The batteries of Examples 1, 3, 4, 5 and 6 are each a battery produced similarly, except that the amount of PFA applied was varied. Comparing these batteries, it is conceivable that when the amount of PFA applied is 0.3 mg/cm$^2$ or more, the amount of the electrolyte solution retained in the separator becomes 0.358 g or more, and the electrolyte solution in an amount necessary for the operating life elongation is enabled to be sufficiently retained in the separator. Therefore, it can be said that it is preferable that the amount of PFA applied be 0.3 mg/cm$^2$ or more. A larger amount of PFA applied is preferable because the amount of the electrolyte solution retained in the separator becomes larger, but when the amount applied exceeds 2.0 mg/cm$^2$, the negative electrode surface is covered up with PFA to reduce the reaction area and reduce the discharge characteristics of the battery. Therefore, it is preferable to set the amount of PFA applied to 2.0 mg/cm$^2$ or less.

(v) The battery of Comparative Example 3 is a battery produced as in the case of Example 1, except for using PTFE in place of PFA as the water repellent. Comparing these Example 1 and Comparative Example 3, whereas Example 1 has an internal resistance value of 19.2 m$\Omega$, and an amount of the electrolyte solution retained in the separator of 0.387 g, Comparative Example 3 has an internal resistance value of 25.2 m$\Omega$, and an amount of the electrolyte solution retained in the separator of 0.249 g; it is clear that the battery of Comparative Example 3 is inferior in the operating life characteristics after the continuous charging to the battery of Example 1. It is clear from this that even if PTFE was used, the effect as seen in the present invention is unable to be attained and PFA is effective as the water repellent.

(vi) From the above, it can be said that the negative electrode, for a nickel hydrogen secondary battery, using the hydrogen absorbing alloy whose density was increased by reducing the Mg ratio and comprising PFA as the water repellent contributes to the enhancement of operating life characteristics when the battery was continuously charged.

<Aspects of the present invention>

The invention is set out in the appended claims. A first aspect of the present invention is a negative electrode for a nickel hydrogen secondary battery, the negative electrode comprising a negative electrode core and a negative electrode mixture held on the negative electrode core, wherein the negative electrode mixture comprises a hydrogen absorbing alloy and a water repellent, wherein: the hydrogen absorbing alloy has a composition represented by the general formula: $Ln_{1-x}Mg_xNi_{y-a-b}Al_aM_b$ (wherein Ln represents at least one element selected from La, Ce, Pr, Nd, Pm, Sm, Eu, Gd, Tb, Dy, Ho, Er, Tm, Yb, Lu, Sc, Y, Ti and Zr; M represents at least one element selected from V, Nb, Ta, Cr, Mo, Mn, Fe, Co, Ga, Zn, Sn, In, Cu, Si, P and B; and the subscripts a, b, x and y satisfy relations represented by $0.05 \leq a \leq 0.30$, $0 \leq b \leq 0.50$, $0 < x < 0.05$ and $2.8 \leq y \leq 3.9$, respectively), and has a structure of an $A_2B_7$ type; and the water repellent comprises a perfluoroalkoxyalkane.

A second aspect of the present invention is a nickel hydrogen secondary battery comprising a container and an electrode group accommodated in the container together with an alkali electrolyte solution, wherein the electrode group comprises a positive electrode and a negative electrode stacked through a separator; and the negative electrode is an above-mentioned negative electrode for a nickel hydrogen secondary battery according to the first aspect of the present invention.

**Claims**

1. A negative electrode (26) for a nickel hydrogen secondary battery contained in a nickel hydrogen secondary battery (2), **characterized in that**:

   the negative electrode comprises a negative electrode core, and
   a negative electrode mixture held on the negative electrode core; and
   the negative electrode mixture comprises a hydrogen absorbing alloy and a water repellent, wherein
   the hydrogen absorbing alloy has a composition represented by the general formula: $Ln_{1-x}Mg_xNi_{y-a-b}Al_aM_b$ (wherein Ln represents at least one element selected from La, Ce, Pr, Nd, Pm, Sm, Eu, Gd, Tb, Dy, Ho, Er, Tm, Yb, Lu, Sc, Y, Ti and Zr; M represents at least one element selected from V, Nb, Ta, Cr, Mo, Mn, Fe, Co, Ga, Zn, Sn, In, Cu, Si, P and B; and the subscripts a, b, x and y satisfy relations represented by $0.05 \leq a \leq 0.30$, $0 \leq b \leq 0.50$, $0 < x < 0.05$ and $2.8 \leq y \leq 3.9$, respectively), and has a structure of an $A_2B_7$ type; and
   the water repellent comprises a perfluoroalkoxyalkane.

2. A nickel hydrogen secondary battery (2) comprising a container (10) and an electrode group (22) accommodated in the container (10) together with an alkali electrolyte solution, **characterized in that**:

   the electrode group (22) comprises a positive electrode (24) and a negative electrode (26) stacked through a separator (28), wherein
   the negative electrode (26) is a negative electrode (26) for a nickel hydrogen secondary battery according to claim 1.

**Patentansprüche**

1. Negative Elektrode (26) für eine Nickel-Wasserstoff-Sekundärbatterie, und die in einer Nickel-Wasserstoff-Sekundärbatterie (2) enthalten ist, **dadurch gekennzeichnet, dass**:

   die negative Elektrode einen negativen Elektrodenkern umfasst, und
   ein negatives Elektrodengemisch auf dem negativen Elektrodenkern gehalten ist; und
   das negative Elektrodengemisch eine Wasserstoff absorbierende Legierung und ein Wasserabweisungsmittel umfasst, wobei
   die Wasserstoff absorbierende Legierung eine Zusammensetzung hat, die durch die allgemeine Formel dargestellt ist: $Ln_{1-x}Mg_xNi_{y-a-b}Al_aM_b$ (worin Ln mindestens ein Element darstellt, das aus La, Ce, Pr, Nd, Pm, Sm, Eu, Gd, Tb, Dy, Ho, Er, Tm, Yb, Lu, Sc, Y, Ti und Zr ausgewählt ist; M mindestens ein Element darstellt, das aus V, Nb, Ta, Cr, Mo, Mn, Fe, Co, Ga, Zn, Sn, In, Cu, Si, P und B ausgewählt ist; und die tiefgestellten Zeichen a, b, x und y Beziehungen erfüllen, die durch $0,05 \leq a \leq 0,30$, $0 \leq b \leq 0,50$, $0 < x < 0,05$ bzw. $2,8 \leq y \leq 3,9$ dargestellt sind), und eine Struktur eines $A_2B_7$-Typs hat; und
   das Wasserabweisungsmittel ein Perfluoralkoxyalkan umfasst.

2. Nickel-Wasserstoff-Sekundärbatterie (2), einen Behälter (10) und eine Elektrodengruppe (22) umfassend, die in dem Behälter (10) zusammen mit einer Alkalielektrolytlösung aufgenommen ist, **dadurch gekennzeichnet, dass**:

   die Elektrodengruppe (22) eine positive Elektrode (24) und eine negative Elektrode (26) umfasst, die durch einen Separator (28) gestapelt sind, wobei
   es sich bei der negativen Elektrode (26) um eine negative Elektrode (26) für eine Nickel-Wasserstoff-Sekundärbatterie nach Anspruch 1 handelt.

**Revendications**

1. Électrode négative (26) pour batterie secondaire au nickel-hydrogène et qui est contenue dans une batterie secondaire au nickel-hydrogène (2), **caractérisée en ce que** :

   l'électrode négative comprend un noyau d'électrode négative, et
   un mélange d'électrode négative maintenu sur le noyau d'électrode négative ; et
   le mélange d'électrode négative comprend un alliage absorbant d'hydrogène et un hydrofuge, sachant que
   l'alliage absorbant d'hydrogène a une composition représentée par la formule générale : $Ln_{1-x}Mg_xNi_{y-a-b}Al_aM_b$ (sachant que Ln représente au moins un élément sélectionné parmi La, Ce, Pr, Nd, Pm, Sm, Eu, Gd, Tb, Dy, Ho, Er, Tm, Yb, Lu, Sc, Y, Ti et Zr ; M représente au moins un élément sélectionné parmi V, Nb, Ta, Cr, Mo, Mn, Fe, Co, Ga, Zn, Sn, In, Cu, Si, P et B ; et les indices a, b, x et y satisfont à des relations représentées par $0,05 \leq a \leq 0,30$, $0 \leq b \leq 0,50$, $0 < x < 0,05$ et $2,8 \leq y \leq 3,9$, respectivement), et a une structure d'un type $A_2B_7$ ; et
   l'hydrofuge comprend un perfluoroalkoxyalkane.

2. Batterie secondaire au nickel-hydrogène (2) comprenant un récipient (10) et un groupe d'électrodes (22) logé dans le récipient (10) conjointement avec une solution d'électrolyte alcaline, **caractérisée en ce que**
   le groupe d'électrodes (22) comprend une électrode positive (24) et une électrode négative (26) empilées via un séparateur (28), sachant que
   l'électrode négative (26) est une électrode négative (26) pour une batterie secondaire au nickel-hydrogène selon la revendication 1.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001085013 A
- EP 3128584 A1
- JP 2002025547 A
- JP S61163569 A
- US 2015280216 A1